# EUROPEAN PATENT SPECIFICATION

(11) **EP 0 888 215 B1**
(45) Date of publication and mention of the grant of the patent: **26.06.2002**
(21) Application number: 97906378.1
(22) Date of filing: 25.02.1997
(51) Int. Cl.: B32B 27/04, B32B 29/00, B32B 31/12, B44C 5/04

(54) **A PROCESS FOR THE MANUFACTURE OF A DECORATIVE LAMINATE**
EIN VERFAHREN ZUR HERSTELLUNG EINER DEKORATIVEN BESCHICHTUNG
PROCEDE DE FABRICATION D'UN STRATIFIE DECORATIF

(30) Priority: 28.02.1996 SE 9600761
(43) Date of publication of application: 07.01.1999
(60) Divisional application: 01116774.9
(73) Proprietor: PERSTORP AB, 284 80 Perstorp (SE)
(72) Inventor: GIERTZ, Thomas, S-310 21 Hishult (SE); LINDGREN, Kent, S-284 32 Perstorp (SE); NILSSON, Nils-Joel, S-281 43 Hässleholm (SE)
(74) Representative: HOFFMANN - EITLE
(86) International application number: SE9700310
(87) International publication number: WO9731775

(56) References cited:
- US-A- 3 373 068
- US-A- 3 648 358
- US-A- 3 654 044
- US-A- 3 698 978

## Description

The present invention relates to a process for the manufacture of a decorative thermosetting laminate with a surface structure that realistically matches the decor of the upper surface.

Products coated with thermosetting laminates are frequent today. They are foremost used where the demand for abrasion resistance is high, but also where resistance towards different chemicals and moisture is required. As an example of such products floors, floor beadings, table tops, work tops and wall panels can be mentioned.

The thermosetting laminate mostly consists of a number of base sheets with a decor sheet placed closest to the surface. The decor sheet can be provided with a desired decor or pattern. The most frequent patterns usually represent the image of different kinds of wood, or minerals such as marble or granite. The surface of the laminate can be provided with a structure during the laminating procedure which will make the decor more realistic. Press plates with structure or structure foils are frequently used when manufacturing such a laminate. A negative reproduction of the structure in the press plate or the foil will be imprinted into the laminate during the laminating procedure.

The structure suitably represents features characteristic for the pattern the decor represents in the laminate. The structure can be made coarse to simulate for example roughly planed stone, or smooth with randomly placed pits and micro cracks to simulate polished marble. A wood surface is simulated by providing the surface with randomly placed thin oblong indentations which imitate pores. These indentations must be oriented in the direction of the growth of the simulated wood, which is indicated by the pattern of the graining, in order to make the result realistic. Therefore the graining and the simulated pores are oriented only in the longitudinal direction of the laminate. Since thermosetting laminates are often used on large surfaces as for example floors, it is essential that the pattern doesn't repeat itself. This is achieved by making a random pattern in the floor or by repeating the pattern with a low repetition frequency.

It has for a long time been a great need to be able to manufacture a decorative thermosetting laminate with a decor pattern for example with decor sections directed in different directions and with a matching surface structure. Such a pattern simulates for example boards or bars placed in different directions. Since it has been impossible to provide these patterns with a matching surface structure these patterns have been avoided or provided with a smooth surface.

According to the present invention the above mentioned needs have been met and a thermosetting laminate with a decorative surface with a matching surface structure has been achieved. The invention relates to a process for the manufacture of a decorative thermosetting laminate, which laminate includes thermosetting resin impregnated paper layers. A decor paper in the form of a web or a sheet, provided with a decor pattern having pattern sections with different directions and impregnated with a thermosetting resin, preferably melamine-formaldehyde resin which has then been dried, is placed as a surface layer on a base layer and bonded thereto by pressing under elevated pressure. The invention is characterised in that a matrix is used, which matrix is provided with a number of surface-structure sections being structurally independent from each other. The surface structure sections are intended to at least mainly but preferably completely coincide with corresponding decor sections of the decor paper. The matrix is accurately placed on top of the decor paper before the pressing and is after the pressing separated from the laminate obtained. The laminate will hereby get a decor surface with a surface structure, the different directions of which corresponds with the directions of the different decor sections of the decor pattern. By this process also characteristic deviations in the pattern as for example twigs and the like in wood patterns can be provided with a realistic surface structure.

According to one embodiment of the invention the base layer consists of a number of conventional dry base layer paper webs or base layer paper sheets, impregnated with thermosetting resin. The resin in the uppermost of these is possibly melamine-formaldehyde resin. The rest of the webs or sheets, contains phenol-formaldehyde resin. The decor paper web or decor paper sheet, is placed on top of the conventional base layer webs or base layer sheets. The different paper webs or a stack of sheets are then, continuously or discontinuously respectively laminated together at an elevated pressure and an elevated temperature. The different papers will hereby be bonded to one another.
At the drying of the above resin impregnated paper webs the solvent is evaporated and the resin is partially cured to a so called B-stage. The impregnated paper obtained is usually called pre-preg.

According to another embodiment of the invention the base layer consists of a particle board or a fibre board. Hereby for example a table top or a laminate floor can be produced at the same time as the lamination of the thermosetting laminate, wherein an extra stage in the manufacturing can be avoided.

The matrix preferably consists of a structure foil. a press plate or the like which have been provided with the desired structure pattern. When the pattern in the decor paper has been designed, this design is suitably used as a base when manufacturing the structure foil. Hereby a three-dimensional structure which completely or partially coincides with the pattern of the decor can be achieved.

The decor paper web or decor paper sheets respectively are preferably provided with positioning means such as colour dots, holes, code lines, indentations or the like. The positioning means are placed in a predetermined relation to the direction variations of the decor pattern. The matrix is preferably also provided with positioning means such as colour dots, holes, code lines, indentations or the like. These positioning means are placed in a predetermined relation to the borders of the surface structure sections. The positioning means in the matrix and in decor paper respectively, are preferably mutually, so that an accurate match between decor and surface structure is achieved by placing the positioning means toward each other.

The decor pattern can, for example, consist of a number of sections of parallel rows of bars, where the bars in adjoining rows are preferably mutually offset in the longitudinal direction. One section of bars is thereby arranged parallel to the longitudinal direction of the laminate and followed by a section of bars arranged perpendicular to the previous section of bars and so on.

A tolerance area is suitably used on the matrix in the demarcation between two adjacent, of each other independent, surface structure sections. The tolerance area consists of a 1 - 20 mm wide, preferably 3 - 10 mm wide, field without any structure.
According to another embodiment a tolerance area is used on the matrix in the demarcation between two adjacent, of each other independent, surface structure sections. This tolerance area consists of a 1 - 20 mm wide, preferably 3 - 10 mm wide, field were the first structure is gradually transformed into the other surface structure.

The surface layer of the laminate suitably includes a so-called overlay paper, preferably of alfa-cellulose, placed on top of the decor paper. Hereby the useful life of the laminate is extended since the overlay paper has to be worn down before a visible wear of the decor sheet takes place. The overlay paper is suitably impregnated with melamine-formaldehyde resin. Suitably at least one of the thermosetting resin impregnated sheets, preferably the uppermost one is coated with hard particles for example of silica, aluminium oxide and/or silicon carbide with an average size of 1 - 100 µm, preferably around 5 - 60 µm. Hereby the wear resistance is increased even further.

The lamination preferably takes place in a continuous laminate press with two steel belts wherein the matrix consists of a structure foil which preferably has the form of a closed web which is continuously fed through the press. The pressure in the press is suitably 5 - 90 Bar, preferably 20 - 70 Bar The temperature is suitably 140 - 200°C, preferably 160 - 180°C. The velocity of the matrix and/or the decor paper web is preferably continuously guided. This is suitably achieved by means of sensors such as mechanical transmitter, scanners. photocells, ccd cameras, pneumatic sensors or the like and the positioning means so that an accurate match between the decor and surface structure is obtained. At discontinuous lamination suitably a multi-opening press is used, in which many laminates can be produced simultaneously. The pressure is then usually 20 - 150 Bar, preferably 70 - 120 Bar and the temperature suitably 120 - 180°C, preferably 140 - 160°C.

The invention is further explained in connection to the accompanying drawings showing different embodiments of the invention where.
- Figure 1 shows parts of a number of base layer sheets, one decor sheet, one overlay sheet and a matrix in the form of a structure foil. The sheets and the foil have been stacked before a pressing in a discontinuous laminate press of multi-opening type.
- Figure 2 shows schematically a continuous lamination procedure according to the invention.

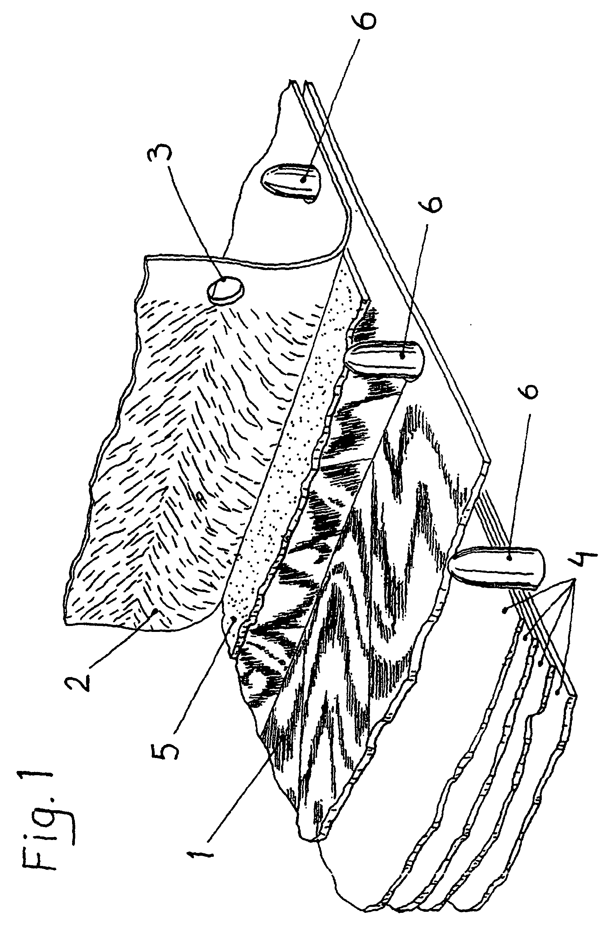

Figure 1 shows a bundle where a number of different sheets have been stacked before a pressing. The bundle consists from bottom to top of
a) a number of base layer sheets 4 which are impregnated with phenol-formaldehyde resin,
b) one base layer sheet 4' which is impregnated with melamine-formaldehyde resin,
c) one decor paper sheet 1 containing pattern sections with stopping directions, which sheet is impregnated with melamine-formaldehyde resin.
d) one so-called overlay paper sheet 5 of α-cellulose impregnated with melamine-formaldehyde resin and coated with hard particles of silicon carbide with an average size of 50 µm,
e) one matrix in the form of a structure foil sheet 2 with different surface structure sections directed in different directions. The decor sheet 1 and the structure foil sheet 2 are cut so that the decor sections and the structure sections are fairly matched. The decor sheet 1 and the structure foil sheet 2, which are provided with positioning means in the form of holes 3 along both of their long sides, are somewhat wider than the other sheets of the bundle. The holes 3, whose centre corresponds to the change of direction in the structure and the decor, will thereby be located outside the long side edges of the other sheets 4, 4' and 5. The decor sheet 1 and the structure foil sheet 2 will be accurately matched by threading them on to a number of guiding rods 6 whose diameter is adapted to the diameter of the holes 3. The other sheets 4, 4' and 5 are oriented by being supported by the inner edges of the guiding rods. Between each of these so called press bundles a flat press plate is placed. When the desired number of press bundles and press plates have been stacked, the bundles are moved to a multi-opening press, where the sheets in the respective press bundle are laminated together at a pressure of 90 Bar and a temperature of 150°C for 60 minutes. The structure foils 2 are after the pressing separated from the completed laminates.

The bundles can, besides being laminated together in a multi-opening press. also be laminated together in a continuous laminate press. The sheets in the press bundles are then suitably first bonded together via their edges, after which the bundles one by one are fed in between two steel belts in the continuous laminate press, where they are laminated. The above mentioned intermediate press plates are excluded when using this method. The sheets in a press bundle can be welded together by locally pressing them together in a number of points while heating so that the resin melts locally. By using this method the sheets in a bundle will be prevented from sliding while handling before pressing.

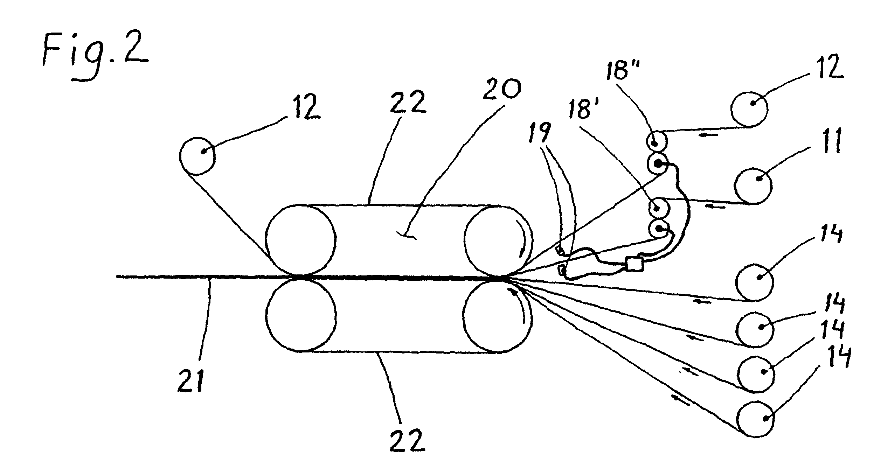

Figure 2 shows schematically a continuous lamination procedure where a number of different paper webs from rolls are feed into a continuous laminate press 20 provided with two continuous steel belts 22 between which the different paper webs are laminated together. The webs consists from below to top of:
a) a number of base paper webs 14 which are impregnated with phenol-formaldehyde resin,
b) one base paper web 14' which is impregnated with melamine-formaldehyde resin.
c) one decor paper web 11 containing decorative pattern sections with different directions which web is impregnated with melamine-formaldehyde resin,
d) one matrix in the form of a structure foil web 12 with different surface structure sections. The decor web 11 and the structure foil web 12 are at their outer edges provided with positioning means 3 in the form of code lines. The velocity of the decor web 11 and the structure foil web 12 is guided via clamp rollers 18', 18. The velocity of the clamp rollers 18, 18' is guided via two optical sensors 19 which detect the mutual position of the code lines on the decor web 11 and the structure foil web 12. The code lines are placed at a predetermined relation to the boarders of the surface structure sections on the structure foil web 12 as well as pattern sections of the decor web 11. The surface structure and decor can hereby be accurately matched before the pressing is initiated. The different webs are continuously laminated together in a continuous laminate press 20 at a pressure of 35 Bar and a tempera ture of 180°C. The structure foil web 12 is after the pressing separated from the completed laminate 21.
The structure foil web 12 can alternatively be cut into sheets These structure foil sheets will then one by one be accurately positioned on top of the decor paper web 11 by means of the code lines and feed into the continuous laminate press 20. It is also possible to cut the decor paper web 11 into sheets instead of the structure foil web 12. The decor paper sheets will then one by one be positioned under the structure foil web 12 by means of the code lines and feed into the continuous laminate press 20. The positioning of the structure foil sheets or the decor paper sheets can be made either automatically or manually. It is also possible to make a bundle of the uppermost sheets as described together with figure 1. These bundles can for example consist of from bottom to top; a decor paper sheet 1, an overlay sheet 5 and a structure foil sheet 2. The accurate positioning between decor and structure will be made when the bundles are made. The bundles will then one by one be placed on top of the base paper web 14' and feed into the continuous laminate press 20. This alternative method can be used when the normal method of matching adjustments becomes insufficient, due to for example large differences in thermal expansion, moisture expansion or very high demands for an exact match between the structure foil web 12 and the decor paper web 11.

The structure foil web 12 according to the embodiment described together with figure 2 can for example be replaced by one of the press belts 22 of the laminate press 20, by providing this with different structure sections. The press belt can further be provided with a number of dowels at its edges, which dowels corresponds to holes placed at the edge of the decor web 11. If a surface structure foil web 12 is used, this is suitably also provided with corresponding holes at its edges. The webs can hereby be oriented and fed like computer paper with so called tractor feeding in a printer. Likewise also the surface structure foil sheet can in the embodiment described in figure 1 be replaced by a press plate which has been provided with corresponding different surface structure sections.

## Claims

1. A process for the manufacture of a decorative thermosetting laminate (21), which laminate (21) includes thermosetting resin impregnated paper layers, wherein a decor paper in the form of a web or a sheet (1 and 1 respectively), provided with a decor pattern having pattern sections with different directions, and impregnated with a thermosetting resin, preferably melamine-formaldehyde resin which resin has then been dried, is placed as a surface layer on a base layer and bonded thereto by pressing under elevated pressure, **characterised in that** a matrix (12 and 2 respectively), provided with a number of surface-structure sections being structurally independent from each other and intended to at least mainly but preferably completely coincide with corresponding decor sections of the decor paper (1, 11), is accurately placed on top of the decor paper before the pressing and is after the pressing separated from the laminate (21) obtained, wherein the laminate (21) will get a decor surface with a surface structure, the different directions of which correspond with the directions of the different decor sections of the decor pattern.

2. Process according to claim 1 **characterised in that** the base layer consists of a number of conventional dry base layer paper webs (14, 14') or base layer paper sheets (4, 4') which are impregnated with a thermosetting resin wherein the resin in the uppermost (14' and 4' respectively) of these possibly is melamine-formaldehyde resin while the rest of the webs or sheets preferably contain phenol-formaldehyde resin, wherein the decor paper web (11) or decor paper sheet (1) respectively, is placed on top of the conventional base layer webs (14, 14') or base layer sheets (4, 4') after which the different paper webs or a stack of sheets respectively are continuously or discontinuously laminated together at an elevated pressure and an elevated temperature.

3. Process according to claim 1 **characterised in that** the base layer consists of a particle board or a fibre board.

4. Process according to any of the claims 1 - 3 **characterised in that** the matrix consists of a structure foil, a press plate or the like (12, 2) which have been provided with the desired structure pattern.

5. Process according to any of the claims 1 - 4 **characterised in that** the decor paper web (11) or decor paper sheet (1) respectively, has positioning means (3) such as colour dots, holes, code lines, indentations or the like, and that said positioning means (3) are placed in a predetermined relation to the direction variations of the decor pattern.

6. Process according to any of the claims 1 - 5 **characterised in that** the matrix (12, 2) is provided with positioning means (3) such as colour dots, holes, code lines, indentations or the like, and that said positioning means (3) are placed in a predetermined relation to the borders of the surface structure sections.

7. Process according to claim 5 or 6 **characterised in that** the positioning means (3) in the matrix and decor paper (1, 11) respectively, are mutually matched, so that by placing them toward each other an accurate match between decor and surface structure is achieved.

8. Process according to any of the claims 1 - 7 **characterised in that** the decor pattern consists of a number of sections of parallel rows of bars, where the bars in adjoining rows are preferably mutuallly offset in the longitudinal direction, wherein one section of bars arranged parallel to the longitudinal direction of the laminate is followed by a section of bars arranged perpendicular to the previous section of bars.

9. Process according to any of the claims 1 - 8 **characterised in that** a tolerance area is used on the matrix in the demarcation between two adjacent, of each other independent, surface structure sections, which tolerance area consists of a 1 - 20 mm wide, preferably 3 - 10 mm wide, field without any structure.

10. Process according to any of the claims 1 - 8 **characterised in that** a tolerance area is used on the matrix in the demarcation between two adjacent, of each other independent, surface structure sections. which tolerance area consists of a 1 - 20 mm wide, preferably 3 - 10 mm wide, field were the first surface structure is gradually transformed into the second surface structure.

11. Process according to any of the claims 1-10 **characterised in that** the surface layer of the laminate includes a so called overlay paper (5), preferably of alfa-cellulose, placed on top of the decor paper (1, 11).

12. Process according to claim 11 **characterised in that** the overlay paper (5) is impregnated with melamine-formaldehyde resin.

13. Process according to any of the claims 2 - 12 **characterised in that** the lamination takes place in a continuous laminate press (20) wherein the matrix consists of a structure foil (12) which preferably has the form of a closed web which is continuously fed through the press.

14. Process according to claim 12 **characterised in that** the pressure in the press is 5 - 90 Bar, preferably 20 - 70 Bar, and that the temperature is 140 - 200°C. preferably 160 - 180°C.

15. Process according to any of the claims 1 - 14 **characterised in that** velocity of the matrix and/or the decor paper web is continuously guided by means of sensors such as mechanical transmitters, scanners, photocells, ccd cameras, pneumatic sensors or the like (19) and the positioning means (3) so that an accurate match between the decor and surface structure is obtained.

16. Process according to any of the claims 1 - 15 **characterised in that** at least one of the thermosetting resin impregnated sheets, preferably the uppermost one is coated with hard particles, for example silica, aluminium oxide and/or silicon carbide with an average size of 1 - 100 µm, preferably around 5 - 60 µm.

## Patentansprüche

1. Verfahren für die Herstellung eines dekorativen wärmeaushärtenden Laminats (21), welches Laminat (21) mit einem wärmeaushärtenden Harz imprägnierte Papierlagen aufweist, wobei ein Dekorpapier in Form einer Bahn oder eines Bogens (11 und 1 jeweils), das mit einem Dekormuster mit Musterabschnitten mit unterschiedlichen Richtungen versehen ist und mit einem wärmeaushärtenden Harz, vorzugsweise Melamin-Formaldehydharz, das dann getrocknet worden ist, imprägniert ist, als eine Oberflächenlage auf eine Basislage gesetzt wird und an dieser durch Pressen unter erhöhtem Druck angehaftet wird, **dadurch gekennzeichnet, dass** eine Matrix (12 und 2 jeweils), die mit einer Anzahl von Oberflächenstrukturabschnitten versehen ist, die in bezug auf die Struktur unabhängig voneinander sind und zumindest hauptsächlich, aber vorzugsweise vollständig, mit entsprechenden Dekorabschnitten des Dekorpapiers (1, 11) übereinstimmen sollen, genau auf die Oberseite des Dekorpapiers vor dem Pressen angeordnet und nach dem Pressen von dem erhaltenen Laminat (21) getrennt wird, wobei das Laminat (21) eine Dekoroberfläche mit einer Oberflächenstruktur erhalten wird, deren unterschiedliche Richtungen mit den Richtungen der unterschiedlichen Dekorabschnitte des Dekormusters übereinstimmen.

2. Verfahren gemäß Anspruch 1, **dadurch gekennzeichnet, dass** die Basislage aus einer Anzahl von herkömmlichen trockenen Basislagen-Papierbahnen (14, 14') oder Basislagen-Papierbögen (4, 4') besteht, die mit einem wärmeaushärtenden Harz imprägniert sind, wobei das Harz in der am weitesten oben gelegenen (14' und 4' jeweils) Basislage möglicherweise Melamin-Formaldehydharz ist, während der Rest der Bahnen oder Bögen vorzugsweise Phenol-Formaldehydharz enthält, wobei die Dekorpapierbahn (11) oder der Dekorpapierbogen (1) jeweils auf die Oberseite der herkömmlichen Basispapierbahnen (14, 14') oder Basispapierbögen (4, 4') gesetzt wird, wonach die unterschiedlichen Papierbahnen oder ein Stapel von Bögen jeweils kontinuierlich oder diskontinuierlich bei erhöhtem Druck und einer erhöhten Temperatur zusammen laminiert werden.

3. Verfahren gemäß Anspruch 1, wobei die Basislage aus einer Spanplatte oder einer Faserplatte besteht.

4. Verfahren gemäß einem der Ansprüche 1 bis 3, **dadurch gekennzeichnet, dass** die Matrix aus einer Strukturfolie, einer Pressplatte oder ähnlichem (12, 2) besteht, die mit dem gewünschten Strukturmuster versehen worden sind.

5. Verfahren gemäß einem der Ansprüche 1 bis 4, **dadurch gekennzeichnet, dass** die Dekorpapierbahn (11) oder der Dekorpapierbogen (1) jeweils Positioniereinrichtungen (3) besitzt, wie Farbpunkte, Löcher, Codierlinien, Einbuchtungen oder ähnliches, und dass die Positioniereinrichtungen (3) in einer vorbestimmten Beziehung zu den Richtungsvariationen des Dekormusters angeordnet werden.

6. Verfahren gemäß einem der Ansprüche 1 bis 5, **dadurch gekennzeichnet, dass** die Matrix (12, 2) mit einer Positioniereinrichtung (3) versehen ist wie Farbpunkten, Löchern, Codierlinien, Einbuchtungen oder ähnliches, und dass die Positioniereinrichtungen (3) in einer vorbestimmten Beziehung zu den Rändern der Oberflächenstrukturabschnitte angeordnet sind.

7. Verfahren gemäß Anspruch 5 oder 6, **dadurch gekennzeichnet, dass** die Positioniereinrichtungen (3) in der Matrix und im Dekorpapier (1, 11) jeweils in wechselseitiger Übereinstimmung sind, so dass, indem diese zueinander gesetzt werden, eine genaue Übereinstimmung zwischen Dekor und Oberflächenstruktur erreicht wird.

8. Verfahren gemäß einem der Ansprüche 1 bis 7, **dadurch gekennzeichnet, dass** das Dekormuster aus einer Anzahl von Abschnitten paralleler Reihen von Balken besteht, wobei die Balken in angrenzenden Reihen vorzugsweise gegenseitig in Längsrichtung versetzt sind, wobei ein Abschnitt von Balken, der parallel zur Längsrichtung des Laminats angeordnet ist, von einem Abschnitt von Balken gefolgt wird, der senkrecht zu dem vorhergehenden Abschnitt von Balken angeordnet ist.

9. Verfahren gemäß einem der Ansprüche 1 bis 8, **dadurch gekennzeichnet, dass** eine Toleranzfläche auf der Matrix in dem Trenngebiet zwischen zwei benachbarten, voneinander unabhängigen Oberflächenstrukturabschnitten verwendet wird, wobei die Toleranzfläche aus einem 1 - 20 mm breiten, vorzugsweise 3 - 10 mm breiten Feld ohne jegliche Struktur besteht.

10. Verfahren gemäß einem der Ansprüche 1 bis 8, **dadurch gekennzeichnet, dass** eine Toleranzfläche auf der Matrix in dem Trenngebiet zwischen zwei benachbarten, voneinander unabhängigen Oberflächenstrukturabschnitten verwendet wird, wobei die Toleranzfläche aus einem 1 - 20 mm breiten, vorzugsweise 3 - 10 mm breiten Feld besteht, wo die erste Oberflächenstruktur nach und nach in die zweite Oberflächenstruktur übergeführt wird.

11. Verfahren gemäß einem der Ansprüche 1 bis 10, **dadurch gekennzeichnet, dass** die Oberflächenlage des Laminats ein sogenanntes Auflagepapier (5) vorzugsweise aus Alfa-Zellulose, aufweist, das auf die Oberseite des Dekorpapiers (1, 11) angeordnet wird.

12. Verfahren gemäß Anspruch 11, **dadurch gekennzeichnet, dass** das Auflagepapier (5) mit Melamin-Formaldehydharz imprägniert ist.

13. Verfahren gemäß einem der Ansprüche 2 bis 12, **dadurch gekennzeichnet, dass** das Laminieren in einer kontinuierlichen Laminierpresse (20) stattfindet, worin die Matrix aus einer Strukturfolie (12) besteht, die vorzugsweise die Form einer geschlossenen Bahn besitzt, die kontinuierlich durch die Presse geführt wird.

14. Verfahren gemäß Anspruch 12, **dadurch gekennzeichnet, dass** der Druck in der Presse 5 - 90 bar, vorzugsweise 20 - 70 bar, und dass die Temperatur 140 - 200°C, vorzugsweise 160 bis 180°C ist.

15. Verfahren gemäß einem der Ansprüche 1 bis 14, **dadurch gekennzeichnet, dass** die Geschwindigkeit der Matrix und/oder der Dekorpapierbahn kontinuierlich mit Hilfe von Sensoren wie mechanische Transmitter, Scanner, Photozellen, CCD-Kameras, pneumatische Sensoren oder ähnliches (19) sowie die Positioniereinrichtung (3) geführt wird, so dass eine genaue Übereinstimmung zwischen dem Dekor und der Oberflächenstruktur erhalten wird.

16. Verfahren gemäß einem der Ansprüche 1 bis 15, **dadurch gekennzeichnet, dass** zumindest einer der mit einem wärmeaushärtenden Harz imprägnierten Bögen, vorzugsweise der am weitesten oben gelegene, mit harten Partikeln beschichtet ist, z.B. Siliziumoxid, Aluminiumoxid und/oder Siliziumcarbid mit einer Durchschnittsgröße von 1 - 100 µm, vorzugsweise etwa 5 - 60 µm.

## Revendications

1. Procédé de fabrication de stratifiés décoratifs thermodurcissables (21) comportant des couches de papier imprégné de résine thermodurcissable, dans lequel une bande ou feuille (11 et 1, respectivement) de papier à décor, qui porte un motif décoratif présentant des sections de motif orientées dans différentes directions et qu'on a imprégnée d'une résine thermodurcissable, de préférence d'une résine mélamine-formaldéhyde, résine qu'on a ensuite fait sécher, est placée en tant que couche de surface sur une couche de base et liée à celle-ci par pressage sous haute pression, ledit procédé étant **caractérisé en ce qu'**une matrice (12 et 2, respectivement), dotée d'un certain nombre de sections de structure de surface qui sont, en ce qui concerne la structure, indépendantes les unes des autres, et qui sont destinées à coïncider au moins en grande partie, mais de préférence parfaitement, avec les sections de motif correspondantes du papier à décor (1, 11), est disposée avec précision sur le papier à décor avant le pressage, puis éloignée, après le pressage, du stratifié (21) obtenu, grâce à quoi le stratifié (21) est doté d'une surface à décor présentant une structure de surface dont les différentes directions correspondent aux directions des différentes sections du motif décoratif.

2. Procédé conforme à la revendication 1, **caractérisé en ce que** la couche de base est constituée d'un certain nombre de bandes de papier (14, 14') de couche de base ou feuilles de papier (4, 4') de couche de base sèches classiques, bandes ou feuilles imprégnées d'une résine thermodurcissable qui peut être, pour la bande ou feuille supérieure (respectivement 14' ou 4'), une résine mélamine-formaldéhyde tandis que, pour les autres bandes ou feuilles, il s'agit de préférence d'une résine phénol-formaldéhyde, la bande de papier à décor (11) ou la feuille de papier à décor (1), respectivement, étant placée par-dessus les bandes (14, 14') de couche de base ou feuilles (4, 4') de couche de base classiques, après quoi les différentes bandes de papier ou la pile de feuilles sont respectivement stratifiées ensemble en continu ou en discontinu, sous haute pression et à haute température.

3. Procédé conforme à la revendication 1, **caractérisé en ce que** la couche de base consiste en un panneau de particules ou en un panneau de fibres

4. Procédé conforme à l'une des revendications 1 à 3, **caractérisé en ce que** la matrice est constituée par une feuille métallique structurée, un plateau de presse ou un objet similaire (12, 2), qui a été doté du motif de structure voulu.

5. Procédé conforme à l'une des revendications 1 à 4, **caractérisé en ce que** la bande (11) de papier à décor ou la feuille (1) de papier à décor, respectivement, présente des moyens de positionnement (3), tels que points de couleur, lignes de code, trous, indentations ou similaires, et **en ce que** ces moyens de positionnement (3) sont placés de façon prédéterminée en correspondance avec les changements de direction d'orientation du motif du décor.

6. Procédé conforme à l'une des revendications 1 à 5, **caractérisé en ce que** la matrice (12, 2) présente des moyens de positionnement (3), tels que points de couleur, lignes de code, trous, indentations ou similaires, et **en ce que** ces moyens de positionnement (3) sont placés de façon prédéterminée en correspondance avec les frontières des sections de structure de surface.

7. Procédé conforme à la revendication 5 ou 6, **caractérisé en ce que** les repères de positionnement (3) respectifs de la matrice et du papier à décor (1, 11) se correspondent mutuellement de telle sorte que l'on puisse, en les plaçant les uns en face des autres, obtenir une correspondance précise entre le décor et la structure de surface.

8. Procédé conforme à l'une des revendications 1 à 7, **caractérisé en ce que** le motif du décor est constitué d'un certain nombre de sections à rangées parallèles de traits, les traits de rangées adjacentes étant de préférence mutuellement décalés dans la direction longitudinale, et une section où les traits sont disposés dans la direction longitudinale du stratifié étant suivie d'une section où les traits sont disposés dans la direction perpendiculaire à celle des traits de la section précédente.

9. Procédé conforme à l'une des revendications 1 à 8, **caractérisé en ce que** l'on utilise une zone de tolérance sur la matrice, pour la démarcation entre deux sections de structure de surface adjacentes et indépendantes l'une de l'autre, laquelle zone de tolérance consiste en un domaine, large de 1 à 20 mm et de préférence de 3 à 10 mm, qui ne porte aucune structure de surface.

10. Procédé conforme à l'une des revendications 1 à 8, **caractérisé en ce que** l'on utilise une zone de tolérance sur la matrice, pour la démarcation entre deux sections de structure de surface adjacentes et indépendantes l'une de l'autre, laquelle zone de tolérance consiste en un domaine, large de 1 à 20 mm et de préférence de 3 à 10 mm, où l'on passe progressivement de la première structure de surface à la deuxième structure de surface.

11. Procédé conforme à l'une des revendications 1 à 10, **caractérisé en ce que** la couche de surface du stratifié comporte ce qu'on appelle un papier de couverture (5), de préférence en alpha-cellulose, placé par-dessus le papier à décor (1, 11).

12. Procédé conforme à la revendication 11, **caractérisé en ce que** le papier de couverture (5) est imprégné d'une résine mélamine-formaldéhyde.

13. Procédé conforme à l'une des revendications 2 à 12, **caractérisé en ce que** la stratification a lieu dans une presse (20) à stratifiés fonctionnant en continu, la matrice étant constituée par une feuille métallique structurée (12) qui est de préférence une bande que l'on fait passer en continu dans la presse.

14. Procédé conforme à la revendication 12, **caractérisé en ce que** la pression exercée par la presse vaut de 5 à 90 bars, et de préférence de 20 à 70 bars, et **en ce que** la température vaut de 140 à 200 °C, et de préférence de 160 à 180 °C.

15. Procédé conforme à l'une des revendications 1 à 14, **caractérisé en ce que** les vitesses de déplacement de la matrice et/ou de la bande de papier à décor sont régulées en continu au moyen des moyens de positionnement (3) et de capteurs (19) comme des transmetteurs mécaniques, des capteurs optiques, des cellules photoélectriques, des caméras à CCD, des capteurs pneumatiques ou similaires, afin que soit obtenue une correspondance précise entre le décor et la structure de surface.

16. Procédé conforme à l'une des revendications 1 à 15, **caractérisé en ce qu'**au moins l'une des feuilles imprégnées de résine thermodurcissable, et de préférence la feuille supérieure, est revêtue de particules dures, par exemple de particules de silice, d'oxyde d'aluminium et/ou de carbure de silicium, dont la taille moyenne vaut de 1 à 100 µm, et de préférence, à peu près de 5 à 60 µm.
